# EUROPEAN PATENT APPLICATION

(11) **EP 2 824 164 A1**
(43) Date of publication of application: **14.01.2015**
(21) Application number: 13004455.5
(22) Date of filing: 12.09.2013
(51) Int. Cl.: C10L 5/36, C10L 5/44, C10L 9/08

(54) **Method for treatment of plant raw material pellets**

(30) Priority: 11.07.2013 LV 130101
(71) Applicant: Agency of University of Latvia "Institute of Physics of University of Latvia", Salaspils 2169 (LV); "Latvian State Institute of Wood Chemistry" Derived public person, 1006 Riga (LV)
(72) Inventor: Valdmanis, Raimonds, 1030 Riga (LV); Zake, Maija, 1083 Riga (LV); Purmalis, Modris, 4730 Strencu municipality (LV); Lickrastina, Agnesa, 3008 Jelgava (LV); Barmina, Inesa, 1021 Riga (LV); Arshanitsa, Aleksandr, 1063 Riga (LV); Telysheva, Galina, 1039 Riga (LV); Solodovnik, Valentin, 1063 Riga (LV)
(74) Representative: Dolgicere, Nina

(57) **Abstract**

The present invention relates to the technology of plant raw material treatment for obtaining fuel. An object of this invention is to enhance the heating value of the fuel, simultaneously decreasing the energy costs.

According to the present invention, the object is achieved by exposure plant raw material pellets to a high-frequency electromagnetic field at frequency in a range of 13.5 MHz to 2.45 GHz during 120-200 s, until the temperature of surface of pellets reaches 410-450K.

In the proposed method, the treatment of pellets is carried out at relatively low temperatures (up to 450K), when a thermal decomposition of hemicelluloses and celluloses still does not occur, but the moisture content in the pellets decreases, while increasing the rate of thermal decomposition of pellets, and increasing a heating value thereof, intensifying the burnout of volatile compounds and providing more complete combustion in a domestic heating boiler

The activation of the thermal decomposition of pellets and the enhancement of heating value due to microwave pre-treatment may be used also to increase the gasifier capacity and the amount of the energy generated by the integrated gasifier and internal combustion engine

## Description

### Field of the Invention

The present invention relates to the technology of plant raw material treatment for obtaining fuel.

### Background of the Invention

At present, a conversion of plant raw materials into feedstock for fuel by pyrolysis or torrefaction is well known. One of the most efficient torrefaction methods is the method of torrefaction of plant raw material (biomass) by exposure to a high-frequency electromagnetic field at frequency up to 9 GHz. Biomass treatment by exposure to a high-frequency electromagnetic field has been known relatively not long ago, namely, since the 1970s. This exposure to a high-frequency electromagnetic field results in a cleavage of bonds between cellulose and other components, and a raw material carbonization, with a high carbon content. The obtained products are used for production of fuel pellets (US2011219679). Yet, this method is rather complicated, requires high energy consumption, and requires continuous temperature control so that the temperature shall not exceed 573K. Moreover, preparing of pellets from the obtained product involves some technological problems, in particular, the addition of various supplementary materials, and correspondingly, the increase ofenergy costs.

The closest known solution is the method for treatment of pellets of lignocellulosic biomass or various mixtures thereof by exposure to a high-frequency electromagnetic field at frequency in a range of 2.45 to 8 GHz. The method comprises a preliminary drying step at temperatures 353-373K with the decrease of moisture content to 3%, and then the exposure to a high-frequency electromagnetic field with the increase of a temperature up to 55-550K (US20110179701). In said patent special reference is made to the pre-treatment of the preliminary dried biomass by microwaves at temperature of 500-550K, when the rapid thermal decomposition of hemicelluloses and celluloses occurs.

Torrefied biomass pellets are easy to handle, have a high heating value and are easy to grind, which is very important in thermal power stations that utilize powder-like fuel. At the same time, the realization of this method is relatively complicated; the implementation envisages several treatment steps and requires considerable energy costs.

### Summary of the Invention

An object of this invention is to enhance the heating value of the fuel, simultaneously decreasing the energy costs.

According to the present invention, the object is achieved by exposure plant raw material pellets to a high-frequency electromagnetic field at frequency in a range of 13.5 MHz to 2.45 GHz during 90-300s, until the temperature of surface of pellets reaches 410-450K.

In the proposed method, the treatment of pellets is carried out at relatively low temperatures (up to 450K), when a thermal decomposition of hemicelluloses and celluloses still does not occur, but the moisture content in the pellets decreases, while increasing the rate of thermal decomposition of pellets, and increasing a heating value thereof, intensifying the burnout of volatile compounds and providing more complete combustion in a domestic heating boiler.

### Brief Description of the Drawings

The present invention is illustrated in the accompanying drawings, wherein:
Figs. 1-2 are the graphs of weight losses and temperature changes of pellets during the pre-treatment thereof by varying the microwave pre-treatment time.
Figs 3-4 are the graphs of the effect of the pre-treatment of pellets on kinetics of wood pellet combustion process in a heating boiler.

### Detailed Description of the Invention

The method is carried out in the following way.

Pellets made From plant material are exposed to high-frequency electromagnetic field at frequency in the range of 13.5 MHz to 2.40 Gf-Iz to during 90-300s., until the temperature of surface of the pellets reaches 410-450K. The pre-treatment conditions depend on the composition and the initial moisture content of the pellets.

To check the positive effect, the test experiments on the effect of the pre-treatment of the pellets on combustion process of commercial wood pellets and straw pellets in the domestic heating boiler AKGB-20, with the use of the average discrete batches of 3-3.5 kg, at an average duration of treatment - 165-180 s, an average power of the heating boiler - 8-10 kW, and an average maximum power- 14-17 kW, were carried out.

Having compared an kinetic power readings of heating boiler in relation to treated and untreated pellets it has been found that the pre-treatment of pellets allowed achieving during the process of combustion of pellets more rapid increase of a power up to its maximum value (on the average, by 15-18%) increasing the maximum value of a power on the average by 6.6-7.5%, while the heating boiler average power - by 3-3.6%.

Upon the pre-treatment of the pellet by exposure to a microwaves there has been achieved the increase of thermal energy in the equipment. It is shown in the tables below. Having studied the effect of pre-treatment it has been found that the heating effect of the domestic heating boiler decreases while increasing the duration of treatment ,since the increase in duration of treatment results in temperature and weight loss of pellets as the result of emission of volatile compounds during the pre-treatment process.

The data on the treatment of pellets by exposure to a high-frequency electromagnetic field depending on the composition of pellets are shown in the following tables.

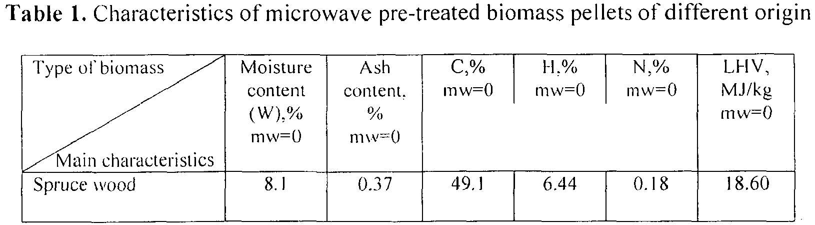

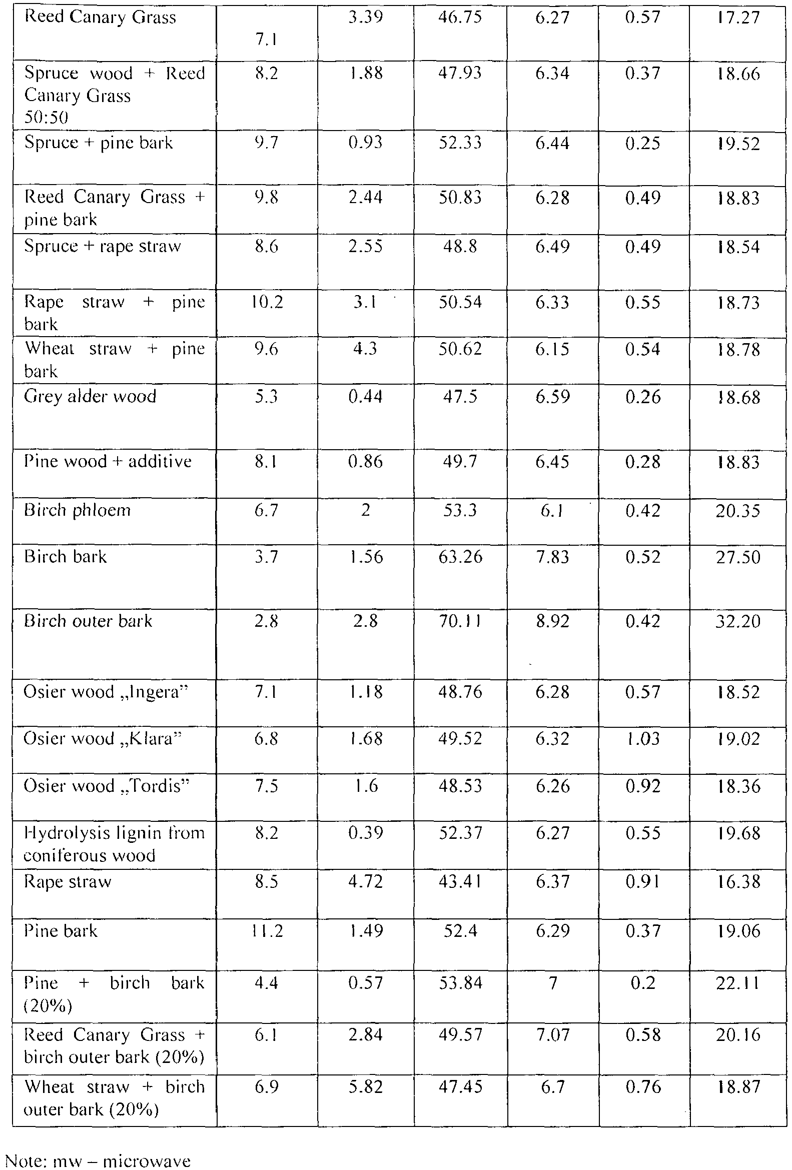

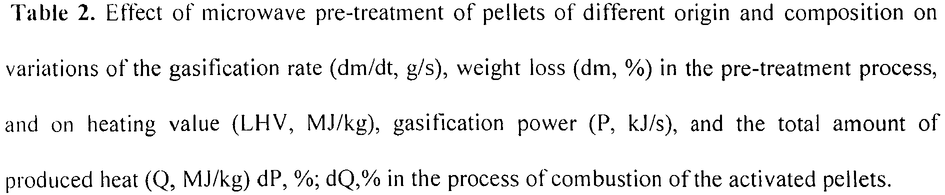

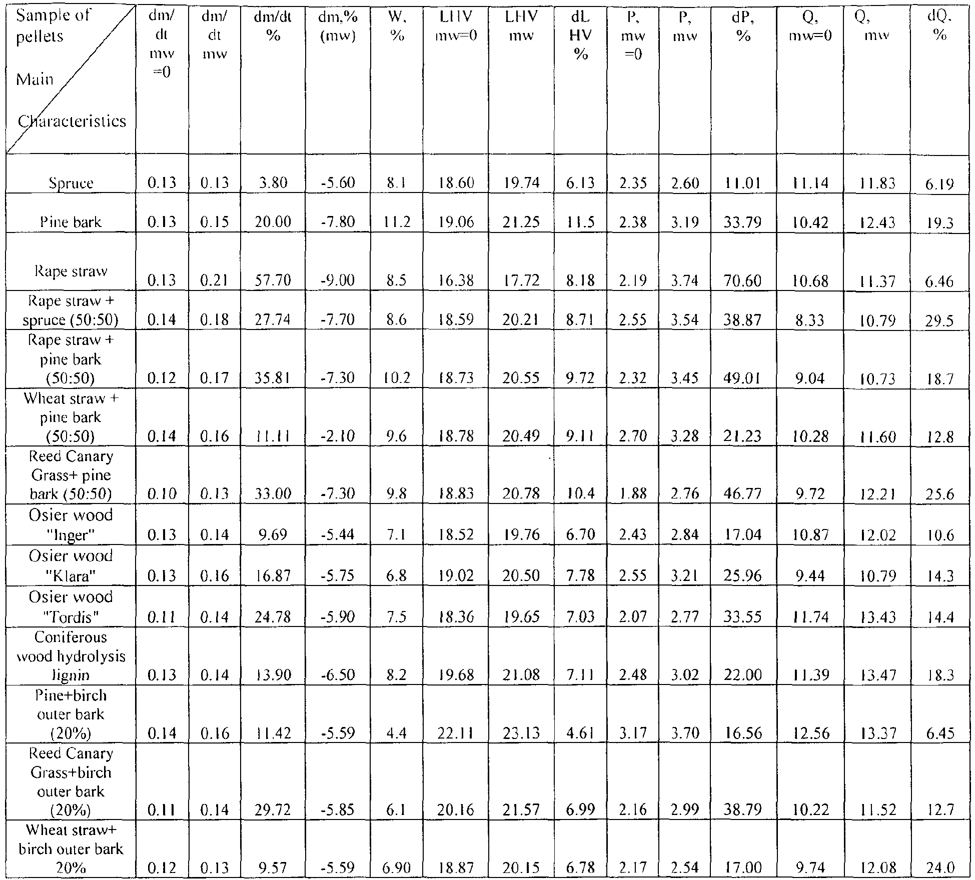

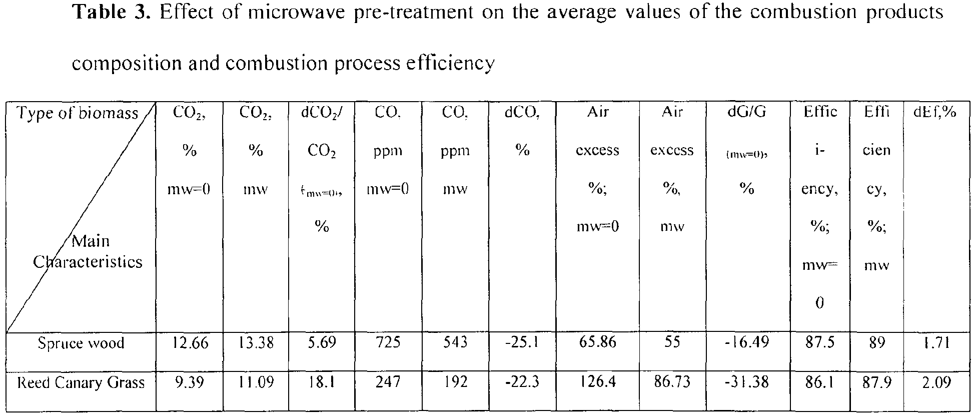

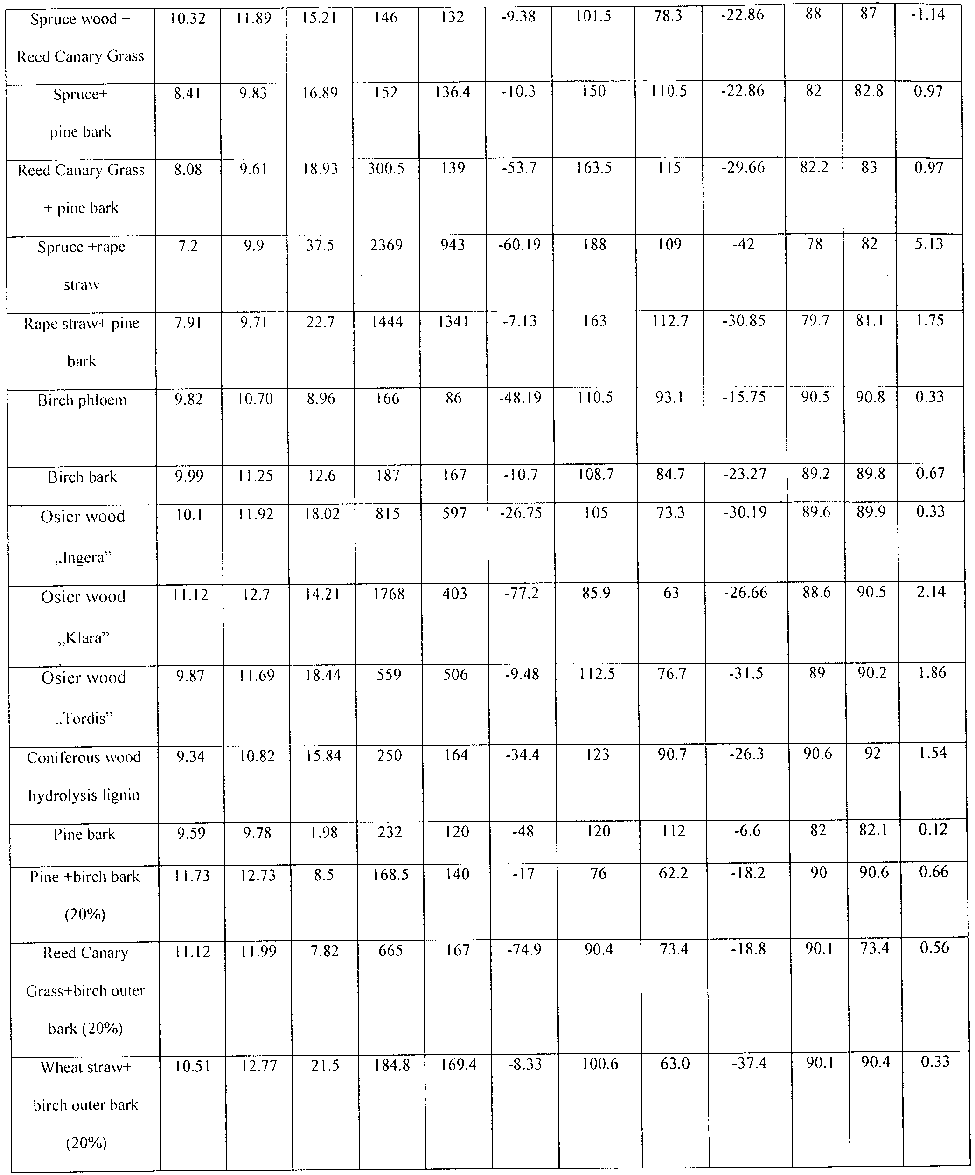

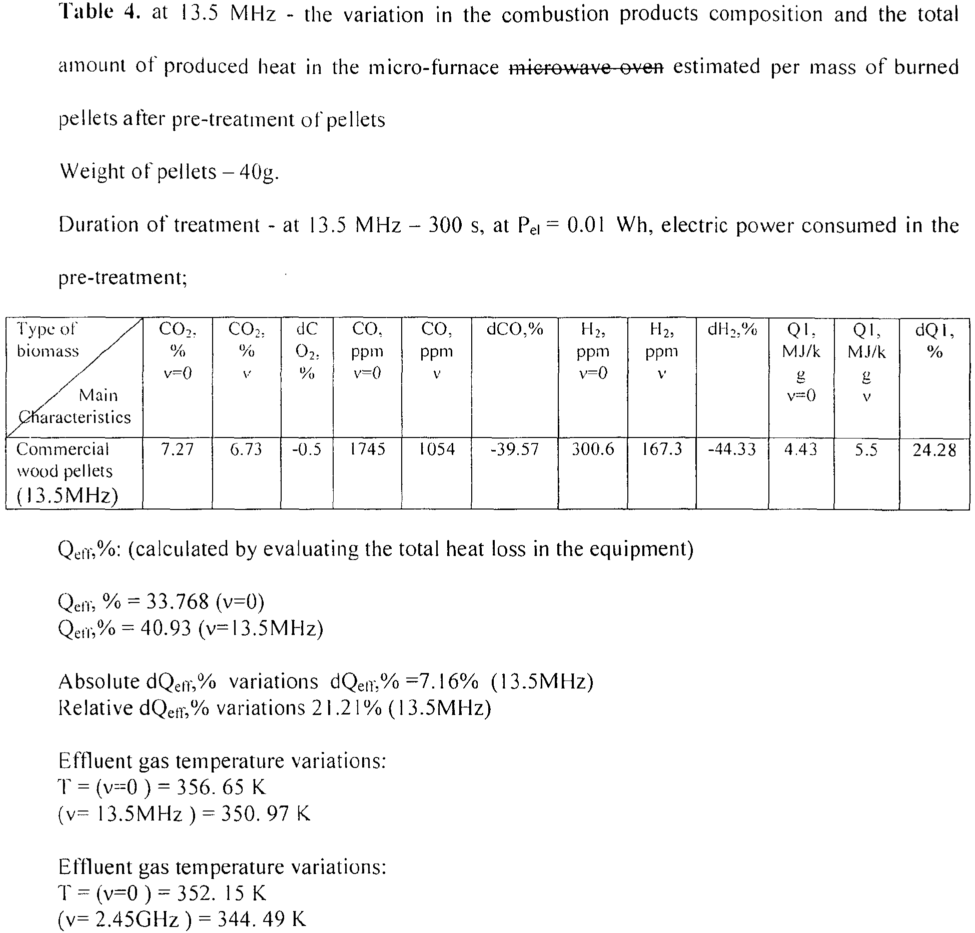

The material of the cell wall of lignocellulosic biomass represents an interpenetrating spatial polymeric network, the main components of which are three types of natural polymers - cellulose, lignin and hemicelluloses. The intra- and inter-molecular bonds inside the lignocarbohydrate network are created through both chemical covalent bonds and hydrogen bonds, owing to the presence of polar hydroxyl groups in all components constituting thereof. The total energy of intra- and inter-molecular lignocarbohydrate bonds determines both mechanical and thermal properties of biomass.

The process of plant biomass combustion is a complex physico-chemical process, consisting of several stages:
- the release of physically bound moisture,
- the gasification of biomass, which is associated with the thermal degradation of the biomass components and the emission of volatile products (CO, CₙHₘ, H₂, and more complicated organic compounds)
- the oxidation of gaseous products with air oxygen at elevated temperature (flaming combustion stage)
- the secondary condensation processes, the release of chemically bound water and the formation of a carbonizate
- the oxidation of the carbonizate with air oxygen in heterogeneous conditions at an elevated temperature (char combustion stage).

Flaming combustion and char combustion stages are exothermal ones and are accompanied by the release of heat energy, while for the removal of moisture, gasification of biomass and secondary condensation processes, it is necessary to provide an additional heat energy supply into biomass, and they can be characterized as endothermic ones.

For the initiation of gasification and biomass flaming combustion external heat energy source is used (according to the proposed method - a propane burner). Upon the ignition of biomass and switching-off of the external heat energy source, the energy, which is necessary for pre-heating, gasification and ignition of a new batch of fuel, comes from already combusted or still combusting biomass. Thus, there is an increase of specific yield of useful heat energy in case of a similar composition of fuel and irrespective the heat exchange loss, with the decrease of the energy consumption for biomass gasification and the increase of the completeness of combustion thereof. Hence, flaming combustion stage is the determinant one in overall energy balance - 70-85% of heat energy, which is obtained upon combusting of plant biomass, and is released as the result of combustion of gaseous products in biomass gasification. Thus, the decrease of the energy consumption for biomass gasification is an essential factor, which enhances the part of appropriately used heat in the overall energy balance. The proposed conditions of microwave pre-treatment of biomass at frequency 2,45GHZ and pre-treatment by exposure to a high-frequency electromagnetic field at frequency 13.5 MHz do not result in the heating of samples above 160⁰C and, hence, cannot initiate the process of the thermal destruction of biomass increasing the energy density of the pellets as a result of torrefaction.

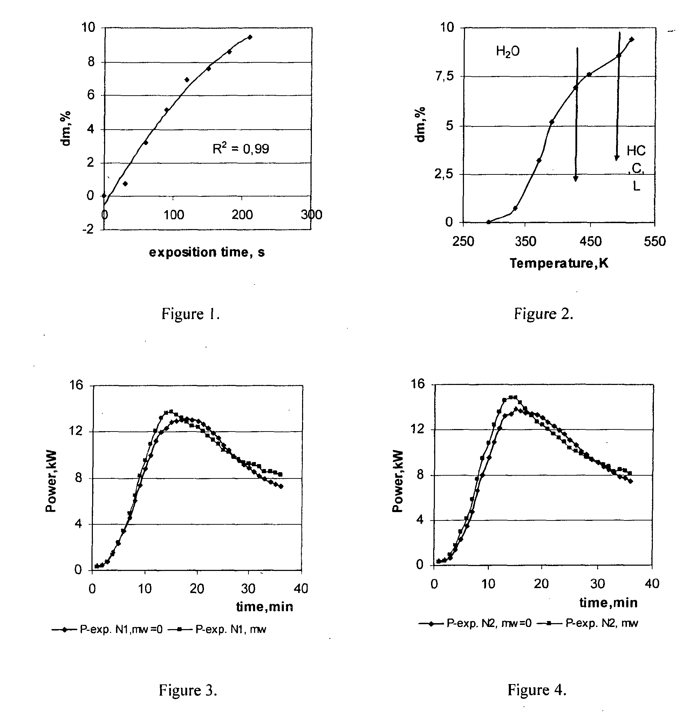

This is supported by a minor loss of mass of the pellets within the range of 1-9% upon microwave treatment (2450 MHz) (Fig. 1) and the increase of heating capacity by 4.6-11.5% (Table 2) compared to those of untreated pellets. Said values of mass losses do not exceed the values of the pellets moisture content before the treatment. At the same time, the release of heat obtained upon the combustion of the pellets subjected to microwave treatment was higher by 6.5-25.6% than that of untreated pellets. That is, the increment in the amount of heat energy obtained upon the combustion of the pellets subjected to microwave treatment is 1.5 -3.5 times as much of the value of the increment of heating value of pellets achieved upon the removal of moisture from the biomass (Table 2).

The obtained results show that the microwave pre-treatment of pellets in the proposed conditions results in more complete combustion thereof in comparison with non-treated biomass that is manifested as the increment of the CO₂ concentration, the decrease in the concentration of CO and the decrease in the excess of air in the combustion products (Table 3).

The effect was observed for the pellets made from various types of plant raw materials - stem wood, herbaceous biomass, straw, lignin, wood bark, and mixtures thereof. The highest increment in the release of heat energy was observed in case of the pellets made from mixtures, one of the components of which was herbaceous biomass or straw (Table 3).

Thus, the pre-treatment of pellets within the proposed conditions decreases the specific consumption of the heat energy needed for the gasification of biomass and the transition to the more stable flaming combustion thereof. The consequences of the aforementioned are more rapid ignition of the pre-treated biomass, faster achievement of the maximum temperature in the combustion area, higher said temperature and more rapid combustion of biomass that is supported by the experimental data. In turn, the higher temperature in the burning area ensures complete combustion of products of gasification and carbonizate. Combination of all proposed factors allows enhancing the heat release when burning of pelletized plant biomass upon the treatment by exposure to a high-frequency electromagnetic field compared to non-treated pellets within the experimentally determined range.

These results show that the microwave pre-treatment of pellets can be used to activate the gasification and combustion process in pellet boilers, ensuring the faster and more intensive gasification of pellets and the burnout of volatile compounds.

The activation of the thermal decomposition of pellets and the enhancement of heating value due to microwave pre-treatment may be used also to increase the gasifier capacity and the amount of the energy generated by the integrated gasifier and internal combustion engine.

## Claims

1. A method for treatment of plant raw material pellets by exposure to a high-frequency electromagnetic field, **characterized in that** exposure to a high-frequency electromagnetic field is carried out until the temperature of surface of the pellets achieves 410-450K.

2. A method according to claim 1, **characterized in that** the frequency of electromagnetic field is within a range of 13.5 MHz - 2.45 GHz.

3. A method according to claim 1, **characterized in that** the duration of exposure to a high-frequency electromagnetic field is 90-300 s.
